# EUROPÄISCHE PATENTSCHRIFT

(11) **EP 0 984 194 B1**
(45) Veröffentlichungstag und Bekanntmachung des Hinweises auf die Patenterteilung: **16.11.2005**
(21) Anmeldenummer: 99116860.0
(22) Anmeldetag: 03.09.1999
(51) Int. Cl.: F16F 15/08, B62D 1/04

(54) **Schwingungsdämpfer**
Vibration damper
Amortisseur de vibrations

(30) Priorität: 04.09.1998 DE 29815926 U
(43) Veröffentlichungstag der Anmeldung: 08.03.2000
(73) Patentinhaber: TRW Automotive Safety Systems GmbH, 63743 Aschaffenburg (DE)
(72) Erfinder: Oreans, Derk, 63811 Stockstadt (DE); Kehle, Reinhold, 63825 Blankenbach (DE); Nawratil, Günther, 85309 Pörnbach (DE)
(74) Vertreter: Degwert, Hartmut

(56) Entgegenhaltungen:
- EP-A- 0 069 787
- DE-C- 19 547 715
- US-A- 4 712 446
- PATENT ABSTRACTS OF JAPAN vol. 012, no. 371 (M-748), 5. Oktober 1988 (1988-10-05) & JP 63 120937 A (MAZDA MOTOR CORP), 25. Mai 1988 (1988-05-25)
- PATENT ABSTRACTS OF JAPAN vol. 1996, no. 11, 29. November 1996 (1996-11-29) & JP 08 193640 A (BRIDGESTONE CORP), 30. Juli 1996 (1996-07-30)

## Beschreibung

Die Erfindung betrifft eine Vorrichtung zur Unterdrückung von Schwingungen in Kraftfahrzeugen, mit einem Befestigungsblech und einem Schwingkörper, der elastisch mit dem Befestigungsblech verbunden ist, wobei ein die Schwingungsamplitude des Schwingkörpers begrenzendes Element vorgesehen ist, das mit einem schwingungsdämpfenden Material beschichtet ist und an einem Gegenelement zur Anlage gelangen kann.

Die im Kraftfahrzeug auftretenden Schwingungen können von der Antriebsmaschine, von unzureichend ausgwuchteten Rädern, von Fahrbahnunebenheiten oder wechselnden Strömungsverhältnissen verursacht werden. Sie können sehr unterschiedliche Frequenzen und Amplituden aufweisen und sind grundsätzlich unvermeidbar. Bei modernen Personenkraftfahrzeugen sind die schwingungsdämpfenden Maßnahmen inzwischen aber so erfolgreich weiterentwickelt worden, daß nennenswerte Beeinträchtigungen kaum noch auftreten. Bei einer Vorrichtung, bei der ein Schwingkörper verwendet wird, der hinsichtlich Masse des Schwingkörpers und Federkonstante seiner elastischen Aufhängung auf bestimmte, sich am Lenkradkranz auswirkende Schwingungen ausgelegt waren, hatte sich jedoch herausgestellt, daß die unerwünschten Schwingungen zwar wirksam durch Zapfen unterdrückt werden können, die mit einem schwingungsdämpfenden Material beschichtet sind und an einem Befestigungsblech in Anlage gelangen, daß unter bestimmten Bedingungen aber das Anschlagen der die Schwingungsamplitude begrenzenden Zapfen an das Befestigungsblech zu störenden Geräuschen führte, obwohl das verwendete, schwingungsdämpfende Material auch geräuschdämpfende Eigenschaften hat. Genauere Untersuchungen haben gezeigt, daß unter bestimmten Bedingungen der Schwingkörper die maximal mögliche Amplitude erreicht, so daß die mit schwingungsdämpfendem Material beschichteten Zapfen mit der Frequenz der eingeleiteten Schwingung am Befestigungsblech anschlagen und dadurch störende Geräusche verursachen.

Aus der JP-A-63120937 ist eine Vorrichtung der eingangs genannten Art bekannt. An dem die Schwingungsamplitude des Schwingkörpers begrenzenden Element ist eine Beschichtung in der Form von Gummipuffern vorgesehen.

Der Erfindung liegt die Aufgabe zugrunde, eine Vorrichtung zu schaffen, bei der störende Geräusche bei der Berührung zwischen dem die Schwingungsamplitude begrenzenden Element und dem Gegenelement verhindert sind.

Diese Aufgabe wird gelöst durch eine Vorrichtung der eingangs genannten Art, die insbesondere zur Unterdrückung von Schwingungen geeignet ist, die am Kranz von Lenkrädern auftreten, und die dadurch gekennzeichnet ist, daß das Gegenelement im Kontaktbereich mit dem Element mit einer unebenen Oberfläche versehen ist. Der Erfindung liegt die Erkenntnis zugrunde, daß das schwingungsdämpfende Material bei den hier in Betracht kommenden Frequenzen dazu neigt, sich infolge elastischer Verformung derart dicht an die Gegenfläche anzulegen, daß die Luft im Berührungsbereich im wesentlichen vollständig vertrieben wird, und daß bei der Gegenbewegung eine gewisse Unterdruckhaftung auftritt, die ein schmatzendes Geräusch verursacht, wenn das schwingungsdämpfende Material bei der Gegenbewegung vom Anschlagbereich wieder abgehoben wird. Somit lassen sich die störenden Geräusche vermeiden, wenn das Auftreten der Unterdruckhaftung verhindert wird. Genau dazu dient die unebene Oberfläche am Gegenelement. Unter "uneben" wird hierbei eine Oberfläche verstanden, die über die zwangsweise immer vorhandenen Oberflächenunebenheiten hinaus deutlich größere, mit dem Auge sichtbare und bewußt angebrachte Unregelmäßigkeiten der Oberfläche aufweist, beispielsweise Riefen, Rillen, Nuten oder Stege. Diese Oberflächengestaltung verhindert ein haftendes Anliegen des schwingungsdämpfende Materials an der Gegenfläche, so daß beim Abheben kein Unterdruckeffekt mit Geräuschbildung mehr auftritt.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
Fig. 1 eine schematische Darstellung der erfindungsgemäßen Vorrichtung in der Draufsicht;
Fig. 2 eine Seitenansicht der Vorrichtung gemäß Fig. 1;
Fig. 2a eine vergrößerte abgebrochene Schnittansicht entlang der Ebene II-II von Fig. 1,
Fig. 3 eine erste Ausführungsform eines Fanghakens;
Fig. 4 eine zweite Ausführungsform eines Fanghakens;
Fig. 5 eine Ausführungsform der erfindungsgemäßen Vorrichtung für die Unterdrückung von Schwingungen am Lenkradkranz in der Draufsicht;
Fig. 6 eine perspektivische Ansicht der Ausführungsform gemäß Fig. 5; und
Fig. 7 eine vergrößerte Einzelheit aus Fig. 5.

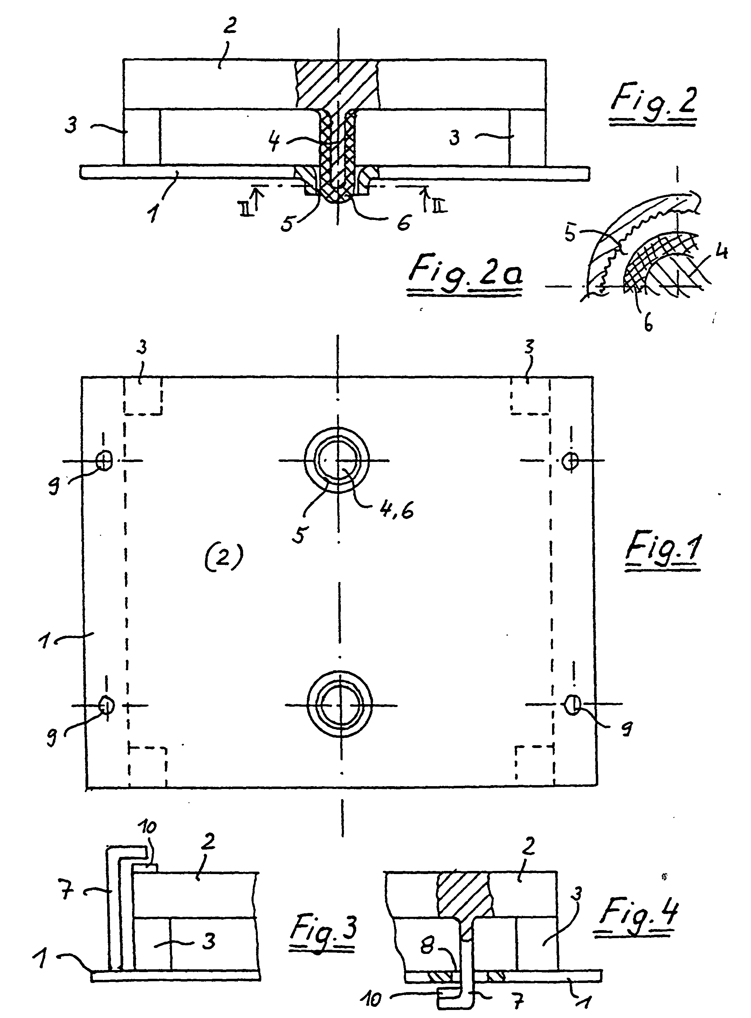

In der schematischen Darstellung gemäß Fig. 1 ist das Befestigungsblech mit 1 und der darunterliegende Schwingkörper mit 2 bezeichnet. Beide Teile sind über vier Stege 3 elastisch miteinander verbunden. Dabei handelt es sich um Gummi oder ein anderes elastomeres Material, das durch einen Vulkanisierungsprozeß mit den beiden Bauteilen 1, 2 verbunden ist. Derartige, vielfach als "Schwingmetall" bezeichnete Vorrichtungen sind für die elastische Lagerung von Motoren in Kraftfahrzeugrahmen seit langem bekannt und bewährt.

Zur Begrenzung der Schwingungsamplitude des Schwingkörpers relativ zum Befestigungsblech ist der Schwingkörper mit einem die Schwingungsamplitude begrenzenden Element versehen, das hier als Zapfen 4 ausgebildet ist. Der Zapfen ist mit einem schwingungsdämpfenden Material 6 beschichtet. Der Zapfen wirkt mit einem Gegenelement zusammen, das hier als Rand einer Ausnehmung 5 ausgebildet ist. Die Ausnehmung ist im Befestigungsblech 1 durch Ausstanzen und Umbördeln ausgebildet. Insgesamt sind zwei Zapfen 4 vorgesehen, die in zwei Ausnehmungen 5 eingreifen.

Der Schwingkörper 2, der zur Unterdrückung unerwünschter Schwingungen relativ zum Befestigungsblech 1 vorzugsweise parallel zum Befestigungsblech 1 schwingen kann, wird durch die Zapfen und die Ausnehmungen in seiner Schwingungsamplitude auf ein vorgegebenes Maß beschränkt, das durch den Freiraum zwischen der Ausnehmung 5 und der schwingungsdämpfenden Beschichtung 6 des Zapfens 4 bestimmt wird und unter Berücksichtigung der möglichen elastischen Verformung der schwingungsdämpfenden Beschichtung 6 konstruktiv an die jeweiligen Verhältnisse angepaßt werden kann. Das Befestigungsblech 1 weist Bohrungen 9 auf, über die die Vorrichtung mit dem Kraftfahrzeugbauteil verbunden werden kann, an dem die unerwünschten Schwingungen auftreten.

Aus der Seitenansicht bzw. Schnittdarstellung der Fig. 2 ist zu sehen, wie der Zapfen 4 des Schwingkörpers 2, der die schwingungsdämpfende Beschichtung 6 aufweist, in die Ausnehmung 5 des Befestigungsblechs 1 eingreift. Es ist ohne weiteres ersichtlich, daß die Schwingbewegung des Schwingkörpers 2, die dieser infolge der elastischen Verbindung über die Stege 3 parallel zum Befestigungsblech 1 ausführen kann, dadurch in ihrer Amplitude begrenzt werden können. Die erfindungsgemäße Ausgestaltung des Kontaktbereiches der Ausnehmungen 5 für die beschichteten Zapfen 4 besteht in einer groben Aufrauhung der Oberfläche durch Riefen, wie dies in Fig. 2a zu sehen ist.

Die elastische Befestigung zwischen dem Befestigungsblech 1 und dem Schwingkörper 2 über die Stege 3 erlaubt außer der gewünschten Schwingung parallel zum Befestigungsblech 1 aber auch eine Schwingung senkrecht zum Befestigungsblech 1, die gemäß Fig. 3 und 4 mittels eines oder mehrerer Fanghaken 7 begrenzt werden kann. Außerdem verhindern diese Fanghaken 7, daß sich der Schwingkörper 2 beim Bruch eines Steges 3 oder bei einem Versagen der Vulkanisierungshaftung vollständig vom Befestigungsblech 1 entfernen kann. Bei der Ausführungsform gemäß Fig. 4 ist der Fanghaken 7 durch eine Ausnehmung 8 im Befestigungsblech 1 hindurchgeführt. Zwischen dem Fanghaken 7 und dem gegenüberliegenden Bauteil 1, 2 ist eine Beschichtung 10 aus schwingungsdämpfenden Material vorgesehen, wie sie auch den Zapfen 4 umgibt. Auch hier ist die mit dem schwingungsdämpfenden Material 10 zusammenwirkende, gegenüberliegende Fläche erfindungsgemäß nicht glatt, sondern aufgeraut bzw. abwechselnd mit radial mehr oder weniger weit vorstehenden Flächenabschnitten ausgebildet, um auch in soweit das Entstehen unerwünschter Geräusche zu verhindern.

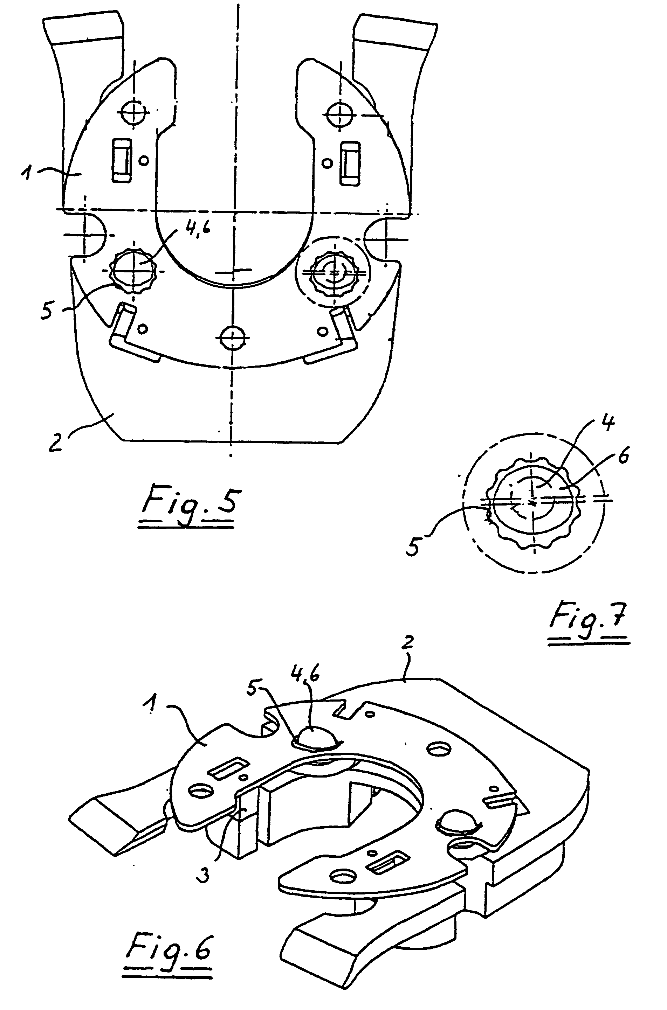

Bei der Ausführungsform gemäß Fig. 5 und 6 handelt es sich um eine Vorrichtung mit Befestigungsblech 1 und Schwingkörper 2, die für die Unterdrückung von Schwingungen am Lenkradkranz ausgelegt ist. Sie wird konzentrisch zur Lenkradachse angeordnet und über das Befestigungsblech 1 mit dem Lenkradskelett verbunden. Der Schwingkörper 2 ist wiederum über vier Stege 3 aus elastischem Material mit dem Befestigungsblech 1 verbunden. Er Soll hauptsächlich in einer Ebene senkrecht zur Lenkradachse schwingen. Schwingungen in Richtung der Lenkradachse sind allerdings nicht ausgeschlossen und können über Fanghaken gemäß Fig. 3 oder 4 begrenzt werden.

Der Schwingkörper ist wiederum mit Zapfen 4 ausgestattet, die mit einer Beschichtung 6 aus schwingungsdämpfenden Material überzogen sind. Die Ausnehmung 5 im Befestigungsblech 1 ist sternförmig, mit in Achsrichtung der Zapfen 4 durchgehenden, stegartigen Vorsprüngen bzw. nutartigen Vertiefungen ausgebildet. Auf diese Weise wird die Kontaktfläche zwischen der Ausnehmung 5 und der Beschichtung 6 der Zapfen 4 erfindungsgemäß so gestaltet, daß der aus dem Stand der Technik bekannte, nachteilige Effekt einer Unterdruckhaftung nicht auftreten kann. Einzelheiten sind aus der vergrößerten Darstellung gemäß Fig. 7 ersichtlich.

Bei erfindungsgemäßen Vorrichtungen, die für Lenkräder bestimmt sind, ergibt sich eine bestimmte Einbauposition, bei der der Schwingkörper 2 bereits in der Ruhelage relativ zum Befestigungsblech 1 infolge des Einflusses der Erdbeschleunigung relativ verschoben ist. Diese von der Einbaulage und der elastischen Verformung der Stege 3 abhängige Verschiebung wird konstruktiv dadurch kompensiert, daß die Achse der beschichteten Zapfen 4 bei ebener, von der Erdbeschleunigung nicht beeinflußter Anordnung der Vorrichtung nicht mit der Achse der Ausnehmung 5 zusammenfällt. Unter dem Einfluß der Erdbeschleunigung sollen dagegen in der Einbaulage am Lenkrad beide Achsen zusammenfallen.

Bei Versuchen mit der erfindungsgemäßen Vorrichtung hat sich ferner herausgestellt, daß bei bestimmten Winkellagen des Lenkrades, also bei Kurvenfahrten auf unebenem Untergrund eine umlaufend gleichmäßig dicke Beschichtung 6 der Zapfen mit schwingungsdämpfenden Material nicht ausreicht. Ein zufriedenstellendes Arbeiten der erfindungsgemäßen Vorrichtung konnte erst erreicht werden, wenn die Beschichtung 6 der Zapfen 4 symmetrisch zu einer vertikalen Mittelebene derart ausgebildet wird, daß die radiale Dicke sich von einem geringsten Wert in der Mitte oben stetig auf einen größten Wert unterhalb der horizontalen Mitte und dann auf einen mittleren Wert in der Mitte unten verändert. Diese Querschnittsform der Beschichtung 6 ist aus Fig. 7 ersichtlich. Damit wird einer unterschiedlichen Beanspruchung der Beschichtung 6 bei bestimmten Winkellagen des Lenkrades Rechnung getragen.

## Patentansprüche

1. Vorrichtung zur Unterdrückung von Schwingungen in Kraftfahrzeugen, mit einem Befestigungsblech (1) und einem Schwingkörper (2), der elastisch mit dem Befestigungsblech (1) verbunden ist, wobei ein die Schwingungsamplitude des Schwingkörpers begrenzendes Element (4) vorgesehen ist, das mit einem schwingungsdämpfenden Material beschichtet ist und an einem Gegenelement zur Anlage gelangen kann, **dadurch gekennzeichnet, daß** das Gegenelement im Kontaktbereich mit dem Element (4) mit einer unebenen Oberfläche versehen ist.

2. Vorrichtung nach Anspruch 1, **dadurch gekennzeichnet, daß** der Schwingkörper (2) über eine Mehrzahl von Stegen (3) mit dem Befestigungsblech (1) elastisch verbunden ist, daß das die Schwingungsamplitude begrenzende Element ein mit einem schwingungsdämpfenden Material beschichteter Zapfen (4) ist, daß das Gegenelement als Rand einer Ausnehmung (5) im Befestigungsblech ausgebildet ist, in die der Zapfen mit radial allseitigem Abstand eingreift, und daß die unebene Oberfläche durch abwechselnd radial mehr oder weniger weit vorstehende Flächenabschnitte ausgebildet ist.

3. Vorrichtung nach Anspruch 2, **dadurch gekennzeichnet, daß** der Kontaktbereich umlaufend im Wechsel axial durchgehende, stegartige Vorsprünge und nutartige Vertiefungen aufweist.

4. Vorrichtung nach Anspruch 3, **dadurch gekennzeichnet, daß** der Kontaktbereich einen sternförmigen Querschnitt aufweist.

5. Vorrichtung nach einem der Ansprüche 1 bis 4, **dadurch gekennzeichnet, daß** der Kontaktbereich schwach konisch ausgebildet ist.

6. Vorrichtung nach einem der Ansprüche 2 bis 5, **dadurch gekennzeichnet, daß** die Zapfen (4) im Querschnitt kreiszylindrisch ausgebildet sind und daß der Schwingkörper (2) mit dem Befestigungsblech (1) derart elastisch verbunden ist, daß die Achsen der Zapfen (4) unter Berücksichtigung des Erdschwerefeldes mit den Achsen der Ausnehmungen (5) zusammenfallen, wenn sich die Vorrichtung in der vorgesehenen Einbaulage befindet.

7. Vorrichtung nach Anspruch 6, **dadurch gekennzeichnet, daß** für eine Einbaulage des Befestigungsbleches (1) etwa parallel zur Ebene eines Lenkradkranzes die Beschichtung (6) der Zapfen (4) symmetrisch zu einer vertikalen Mittelebene derart ausgebildet ist, daß die radiale Dicke sich von einem geringsten Wert in der Mitte oben stetig auf einen größten Wert unterhalb der horizontalen Mitte und dann auf einen mittleren Wert in der Mitte unten verändert.

8. Vorrichtung nach einem der Ansprüche 1 bis 7, **dadurch gekennzeichnet, daß** das Befestigungsblech (1) oder der Schwingkörper (2) einen oder mehrere Fanghaken (7) aufweist, der den Schwingkörper (2) bzw. das Befestigungsblech (1) hintergreift, so daß die Schwingungsamplitude senkrecht zum Befestigungsblech (1) begrenzt und ein Abheben des Schwingkörpers (2) vom Befestigungsblech (1) beim Bruch eines der Stege (3) verhindert wird.

9. Vorrichtung nach Anspruch 8, **dadurch gekennzeichnet, daß** der Fanghaken (7) oder der diesem gegenüberliegende Bereich des anderen Bauteils mit schwingungsdämpfendem Material (10) beschichtet ist.

10. Vorrichtung nach Anspruch 9, **dadurch gekennzeichnet, daß** die dem schwingungsdämpfendem Material (10) gegenüberliegende Fläche mit mehr oder weniger weit vorstehenden Flächenbereichen ausgebildet ist.

## Claims

1. A device for eliminating vibrations in motor vehicles, comprising a fastening plate (1) and a vibratory body (2) which is elastically connected to the fastening plate (1), an element (4) being provided for limiting the amplitude of vibration of the vibratory body, the element being coated with a vibration-damping material and being adapted to abut at a counter element, **characterised in that** the counter element is provided with an uneven surface in the region of contact with the element (4).

2. The device as set forth in claim 1, **characterised in that** the vibratory body (2) is elastically connected to the fastening plate (1) via a plurality of webs (3), that the element limiting the amplitude of vibration is a pin (4) coated with a vibration-damping material, that the counter element is formed as an edge of a recess (5) in the fastening plate into which the pin engages with a radial distance on all sides, and that the uneven surface is formed by surface area sections protruding alternately radially to a greater or lesser extent.

3. The device as set forth in claim 2, **characterised in that** the contact region comprises over its circumference and in alternation axially continuous web-like protuberances and groove-like depressions.

4. The device as set forth in claim 3, **characterised in that** the contact region features a star-shaped cross-section.

5. The device as set forth in any of claims 1 to 4, **characterised in that** the contact region is configured to be slightly conical.

6. The device as set forth in any of claims 2 to 5, **characterised in that** the pins (4) are configured to have a circular cylindrical cross-section and that the vibratory body (2) is elastically connected to the fastening plate (1) such that the axes of the pins (4), in taking into account the earth's gravitational field, coincide with the axes of the recesses (5) when the device is in its intended installation position.

7. The device as set forth in claim 6, **characterised in that** for an installation position of the fastening plate (1) approximately parallel to the plane of a steering wheel rim, the coating (6) of the pins (4) is configured symmetrical to a vertical centre plane such that the radial thickness varies continuously from a minimum value at the top centre to a maximum value below the horizontal middle and then to an average value at the bottom centre.

8. The device as set forth in any of claims 1 to 7, **characterised in that** the fastening plate (1) or the vibratory body (2) includes one or more catch hooks (7) engaging behind the vibratory body (2) or the fastening plate (1), so that the vibration amplitude perpendicular to the fastening plate (1) is limited, preventing the vibratory body (2) from lifting off from the fastening plate (1) in case one of the webs (3) breaks.

9. The device as set forth in claim 8, **characterised in that** the catch hook (7) or the region of the other component opposite the catch hook is coated with a vibration-damping material (10).

10. The device as set forth in claim 9, **characterised in that** the surface area opposite the vibration-damping material (10) is configured with surface area portions protruding to a greater or lesser extent.

## Revendications

1. Dispositif de suppression de vibrations dans des véhicules automobiles, comportant une tôle de fixation (1) et un corps vibratoire (2) qui est relié de manière élastique à la tôle de fixation (1), un élément (4) limitant l'amplitude de vibrations du corps vibratoire étant prévu, qui est revêtu d'un matériau amortissant les vibrations et qui peut venir en appui sur un élément antagoniste, **caractérisé en ce que** dans la région de contact avec l'élément (4), l'élément antagoniste est pourvu d'une surface inégale.

2. Dispositif selon la revendication 1, **caractérisé en ce que** le corps vibratoire (2) est relié de manière élastique à la tôle de fixation (1) par une multitude de baguettes (3), **en ce que** l'élément limitant l'amplitude de vibrations est un tenon (4) revêtu d'un matériau amortissant les vibrations, **en ce que** l'élément antagoniste est réalisé sous forme de bord d'un évidement (5) dans la tôle de fixation, dans lequel le tenon s'engage avec distance radiale de tous les côtés, et **en ce que** la surface inégale est réalisée par des tronçons de surface faisant saillie radialement plus ou moins loin en alternance.

3. Dispositif selon la revendication 2, **caractérisé en ce que** la région de contact présente à la périphérie et en alternance des saillies axialement continues en forme de baguettes et des creux en forme de gorges.

4. Dispositif selon la revendication 3, **caractérisé en ce que** la région de contact présente une section transversale en forme d'étoile.

5. Dispositif selon l'une des revendications 1 à 4, **caractérisé en ce que** la région de contact est réalisée légèrement conique.

6. Dispositif selon l'une des revendications 2 à 5, **caractérisé en ce que** les tenons (4) sont réalisés avec une section transversale cylindrique circulaire et **en ce que** le corps vibratoire (2) est relié de manière élastique à la tôle de fixation (1) de telle sorte que les axes des tenons (4) coïncident avec les axes des évidements (5), en tenant compte du champ de pesanteur, lorsque le dispositif se trouve dans la position de montage prévue.

7. Dispositif selon la revendication 6, **caractérisé en ce que** pour une position de montage de la tôle de fixation (1) approximativement parallèle au plan d'une couronne de volant de direction, le revêtement (6) des tenons (4) est réalisé symétrique par rapport à un plan médian vertical, de telle sorte que l'épaisseur radiale varie de manière continue depuis une valeur minimum, en haut au milieu, à une valeur maximum, au-dessous du milieu horizontal, et ensuite à une valeur moyenne, en bas au milieu.

8. Dispositif selon l'une des revendications 1 à 7, **caractérisé en ce que** la tôle de fixation (1) ou le corps vibratoire (2) présente un ou plusieurs crochets d'arrêt (7) engageant par l'arrière le corps vibratoire (2) ou la tôle de fixation (1), de telle sorte que l'amplitude de vibrations est limitée perpendiculairement à la tôle de fixation (1), empêchant que le corps vibratoire (2) se soulève de la tôle de fixation (1) en cas de rupture de l'une des baguettes (3).

9. Dispositif selon la revendication 8, **caractérisé en ce que** le crochet d'arrêt (7) ou la région de l'autre composant, qui est opposée à celui-ci, est revêtu de matériau (10) amortissant les vibrations.

10. Dispositif selon la revendication 9, **caractérisé en ce que** la surface opposée au matériau (10) amortissant les vibrations est réalisée avec des zones de surface faisant saillie plus ou moins loin.
